Europäisches Patentamt

European Patent Office

Office européen des brevets

(19)

(11) Veröffentlichungsnummer: **0 057 732**
**B1**

(12) **EUROPÄISCHE PATENTSCHRIFT**

(45) Veröffentlichungstag der Patentschrift:
01.08.84

(51) Int. Cl.³: **C 02 F 11/12**

(21) Anmeldenummer: 81100792.1

(22) Anmeldetag: 05.02.81

(54) **Verfahren und Vorrichtung zur Ausscheidung von Flüssigkeiten aus heterogenen Flüssigkeits-Massegefügen, zum Beispiel Entwässerungs- bzw. Eindickverfahren für kommunale oder industrielle Schlämme.**

(43) Veröffentlichungstag der Anmeldung:
18.08.82 Patentblatt 82/33

(45) Bekanntmachung des Hinweises auf die Patenterteilung:
01.08.84 Patentblatt 84/31

(84) Benannte Vertragsstaaten:
AT CH DE FR GB LI NL SE

(56) Entgegenhaltungen:
CH - A - 379 417
DE - A - 1 461 443
DE - A - 2 217 558
DE - A - 2 750 028

(73) Patentinhaber: Simon Moos Maskinfabrik ApS,
Mommarkvej 213, DK-6400 Sonderborg (DK)

(72) Erfinder: Moos, Simon, Mommarkvej 213,
DK-6400 Sonderborg (DK)
Erfinder: Larsen, Hans, Gammelskovvej 19 Hyrup,
DK-6534 Agerskov (DK)

(74) Vertreter: Grave, Ivar Gerhard, Dipl.-Phys., Aachener
Strasse 321, D-5000 Köln 41 (DE)

## Beschreibung

Die Erfindung bezieht sich auf ein Verfahren und eine Vorrichtung zur Ausscheidung von Flussigkeiten aus heterogenen Flüssigkeitsfeststoffgefügen als Entwässerungs- bzw. Eindickverfahren für kommunale oder industrielle Schlämme, bei dem in einen Behälter Schlamm bei einem niedrigen und danach bei einem relativ höheren Druck zugepumpt wird und aus dem Behälterdruckraum bzw. einem Schlammkuchen innerhalb des Behälters ein Filtrat abgezogen wird.

Solche Schlämme fallen in der Kanalisation von Gemeinden und Städten sowie bei verschiedenen Industriebetrieben seit Jahren in wachsender Anzahl an. Bevor diese Schlämme in wirtschaftlicher Weise zu Deponien befördert bzw. überhaupt einer Nachbehandlungsstufe ausgesetzt werden, um den Schlämmen eine deponiefähige Konsistenz zu geben, werden die Schlämme mehr oder weniger entwässert.

Hierzu gehören auch Rieselfelder, Schlammabsetzteiche und Schlammtrockenbeete, deren Anlage, Wartung und Räumung allerdings zeitaufwendig und lohnintensiv ist.

Bekannte Verfahren nach dem Prinzip der Schwerkraftfiltration ermöglichen nur eine begrentze Entwässerungsleistung, aber nicht, die für den Schlammkuchen erforderliche gute Stichfestigkeit zu erreichen, deren Güte für eine Ablagerung auf Deponien unumgänglich ist und die bei einem Einlauffeststoffgehalt im Dünnschlamm ab ca. 15% TS (absolute Trockensubstanz) erreicht ist. (GB-A Nr. 153335, US-A Nrn. 1537818, 3317047, DE-U Nr. 1975690 und DE-C Nr. 2320350.)

Gemäss letzterer DE-PS Nr. 2320350 sind bereits transportierbare Behälter mit schrägen siebartigen Entwässerungswänden bekannt, bei denen diese Wände durch eine Stützkonstruktion im Abstand zu den geschlossen ausgebildeten Behälterwänden gehalten sind. Allerdings ist auch hier die Entwässerungsleistung durch das Prinzip der Schwerkraftfiltration vorgegeben und entsprechend beschränkt.

Bekannte Verfahren sind auch insoweit verbesserungsbedürftig, als sie nur Schlammengen bis maximal ca. 10 m³/h in einen offenen Behälter oder Filtersack im Zulauf einzubringen gestatten. Aus der Praxis ergeben sich dann zumeist noch geringere Einlaufmengen, da die Schlammwucht die Poren oder Filtersieböffnung in kurzer Zeit verschliesst und eine Flüssigkeitsableitung weitgehend verhindert, zum anderen nur eine Füllgrösse zulässt, die durch eine Gegenprallwirkung, in Abhängigkeit von der Höhe des Behälters, weitgehend beeinflusst wird.

So können in der Praxis lediglich zur Entwässerung dienende Behälter bzw. Container bis zu ca. 2,0 m Höhe und 4,0 m obere Kantelänge — die Breite wird durch die Bodenabmessungen des Lastkraftwagens eingegrenzt — eingesetzt werden. In etwa können Dünnschlammengen bis 40 m³ innerhalb 5 bis 7h in einen 12-m³-Entwässerungscontainer eingebracht und bis gerade zur beginnenden Stichfestigkeit nach ca. 12 h entwässert werden. Hierbei ist die Konstanz noch immer gelartig bis dickbreiähnlich. Die Schwerkraft bei 2 m Füllhöhe ergibt in Bodenhöhe eine derartige Verdickung, dass die nach 12 bis 20 h noch minimale Abtropfmenge auf die gesamte Entwässerungsleistung, insbesondere auf die Stichfestigkeit des Schlammkuchens, kaum einen Einfluss zeigt.

Zwar sind bereits ein Verfahren und zugehörige Vorrichtung bekannt, um biologische bzw. aerobische Schlämme in eine Flüssigkeit (Filtrat) und feste Schlammbestandteile zu trennen, bei dem in einem geschlossenen Behälter mit Überdruck gearbeitet wird. Allerdings soll hier unter einer Zwischenschicht ein Schlammkonzentrat und über der Zwischenschicht das Filtrat sich bilden und ferner das Filtrat vertikal nach oben, das Schlammkonzentrat vertikal nach unten abgezogen werden. Hier wirkt die Schwerkraft des Filtrates entgegen seiner Abzugrichtung, unterstützt das letztere somit nicht. Die Einwirkung des Überdruckes bezweckt vor allem die Bildung der Zwischenschicht, des Überdruck wirkt nicht ständig auf ein Filtratschlammfestkörperchengemisch ein. Für die Absonderung des Schlammes als Trockensubstanz sind nicht die üblichen Siebe vorgesehen. Es wird kontinuierlich gearbeitet; sofern eine unterbrochene (intermittierende) Arbeitsweise für die Behandlung des Schlammes vorgesehen ist, soll der Filtratabzug entfallen. Der zugehörige Behälter ist stationär mit aus Beton bestehendem zylindrischem Körper mit vertikaler Achse hergestellt, so dass ein Filtratabzug im unteren Bereich, wie bei fahrbaren Behältern üblich, nicht nahegelegt ist. Mittel zur Entnahme des Schlammkuchens sind nicht angegeben (CH-A Nr. 379417).

Bei einem anderen bekannten Filtrationsverfahren wird der sich auf Filterflächen ansammelnde Schlamm, teilweise in Förderrichtung, ausser der Schwerkraft einem Gasdruck ausgesetzt. Allerdings ist hier die Art der Druckverteilung nicht genauer angegeben, soll aber ein stetig steigender Druckzustand sein. Es kann aber auch mit konstantem Unterdruck gearbeitet werden. Allerdings handelt es sich um einen stationären Schlammverdichter aufwendiger Bauart, bei welchem auch Rührer bzw. schneckenartige Schlammverdichter mit Antrieb notwendig sind. Das bekannte Verfahren ist für Dünnschlämme bzw. biologische Schlämme schon aus diesem Grunde nicht oder nur durch besondere Flockenmittelzugabe einsetzbar (DE-A Nr. 2217558).

Ein bekanntes Filtrierverfahren dient zum Auspressen vor Klärschlämmen mit Hilfe von Kammerfilterpressen (DE-A Nr. 2750028). Hier wird in der Regel mit einem oberen und einem unteren Grenzdruckwert gearbeitet. Der obere Druckgrenzwert dient dazu, einen möglichst hohen Feststoffgehalt in einem ausgepressten Schlammkuchen zu erzielen. Diese Druckgrenzwerte werden nicht unmittelbar, sondern über Anlaufpressphasen erreicht. Diesen schliesst sich eine Vielzahl von Presszyklen an, bei denen gleichzeitig Schlamm den Kammern wieder zugeführt wird. Hierdurch soll der Druck schrittweise erhöht werden. Es ist hierbei bekannt, beim Übergang von der einen auf die andere Pressphase den Kammerdruck abzusenken, z.B. um 1 bar, sowie zwischen der Nachbeschickungsphase und der Endpressphase mit einer Zeitverzögerung von 6 ± 2 min zu arbeiten. Dem auszupressenden Nassschlamm kann Kalk (CaO) oder Kalkmilch zugesetzt werden, und man überwacht durch Druckfühler, ob der obere bzw. untere Grenzwert erreicht wird, um dann durch ein Steuersignal die Förderpumpe entsprechend zu- bzw. abzuschalten. Die Grenzwerte sind somit einstellbar, und die Vorrichtung ist ferner mit einem Zyklenzähler für die Pressphasen oder mit dem Druckfühler gekoppelten Verzögerungsgliedern versehen. Die Pressenkammern sind auch über Ventile an der Saugseite einer Vakuumpumpe anschliessbar.

Allerdings handelt es sich bei einer Kammerfilterpresse um eine stationäre Maschine, bei der eine Vielzahl von einzelnen hintereinander angeordneten Presskammern, die zwischen einem feststehenden Pressentisch und einem beweglichen, stempelartigen Pressenkopf lösbar, aber fest eingespannt sind, eine Art Plattenstapel bilden. Eine Einwirkung der Schwerkraft auf den Filtriervorgang ist hier ganz unerheblich. Es wird zwangsläufig, besonders in der Druckenphase, mit ausserordentlich hohen, mindestens 12 bar betragenden Drücken gearbeitet.

Bei einem bekannten Filtrierverfahren werden Filterpressen eingesetzt. Hier wird zwar in der Leitung zwischen Pumpe und Presse ein Überdruck aufgebaut. Filterpressen, nämlich Kammerfilterpressen oder Schraubenverdichter, sind jedoch schwere Maschinen und nur schlecht an transportablen Behältern und zugehörigen Fahrzeuge installierbar. Ferner kann bei biologischen Dünnschlämmen keine mit Hochdruck arbeitende Schlammpumpe bzw. Filterpresse deshalb eingesetzt werden, weil bei letzteren Schlämmen bekanntlich bei relativ niedrigen Drucken gearbeitet werden muss, deshalb weil der Dünnschlamm zart strukturiert ist, bei biologischen Schlämmen ganz überwiegend aus Bakterien besteht und diese auch schon bei einem Rührvorgang, geschweige beim Hochdruck, aufplatzen und somit das Absetzvolumen sich in kurzer Zeit nachteiligerweise vergrössert. Volumenvergrösserungen von 50 bis 60% innerhalb weniger Minuten sind bekannt. Das bekannte Verfahren eignet sich somit nicht für Dünnschlämme nach dem Oberbegriff des Anspruches 1 (DE-A Nr. 1461443).

Der Erfindung liegt die Aufgabe zugrunde, die Entwässerungsleistung, d.h. den Filtratabzug, pro Zeiteinheit, bei Verwendung einfacher mit Filtergeweben oder Feinsieben versehener transportabler Entwässerungsbehälter, insbesondere bei transportablen Dünnschlammbehältern, wesentlich zu erhöhen.

Diese Aufgabe löst die Erfindung so, wie sie in den Ansprüchen gekennzeichnet ist.

Die durch die Erfindung erreichten Vorteile bestehen darin, dass nunmehr heterogene Flüssigkeitsfeststoffgefüge, insbesondere Dünnschlämme, schneller als bisher filtriert werden und, je nach Art des Schlammes, auch im Einzelfall eine Vortrocknung erfolgen kann. Sie ist insbesondere für mit Lastkraftwagen transportierbare Behälter anwendbar, wobei die vorrichtungsmässige Anpassung des Behälters billig ist. Ein weiterer Vorteil besteht darin, dass nun erstmals Grossraumcontainer als Entwässerungsbehälter nutzbar gemacht werden können, einschliesslich von durch Schiffe transportablen Containern, weil durch den wesentlich erhöhten Filtratentzug für die Grosscontainer die erforderliche Wirtschaftlichkeit erreicht wird. Der Grossraumcontainer kann auch in Gleitrahmenbauart und/oder als Sattelschlepper Auflieger od. dgl. eingesetzt werden, je nach der einzeln zweckmässigen Transportart. Es können auch Rundbehälter mit allseitig geschlossener Bauform eingesetzt werden.

Im folgenden wird die Erfindung anhand von lediglich einen Ausführungsweg darstellenden Zeichnungen näher erläutert. Es zeigt:

Fig. 1 einen Behälter mit einem schematisch dargestellten Einflussstutzen und einem Stutzen für Filtratabfluss,

Fig. 2 einen Schnitt nach Linie A-A der Fig. 1,

Fig. 3 eine Draufsicht auf Fig. 1, wobei die obere Wandung entfernt ist,

Fig. 4 eine vergrösserte Darstellung eines Eckbereichs des Behälters, markiert in Fig. 3 mit B, und

Fig. 5 ein Druck-Zeit-Diagramm für einen Ausführungsweg der Druckverteilung im Behälter während des Betriebes.

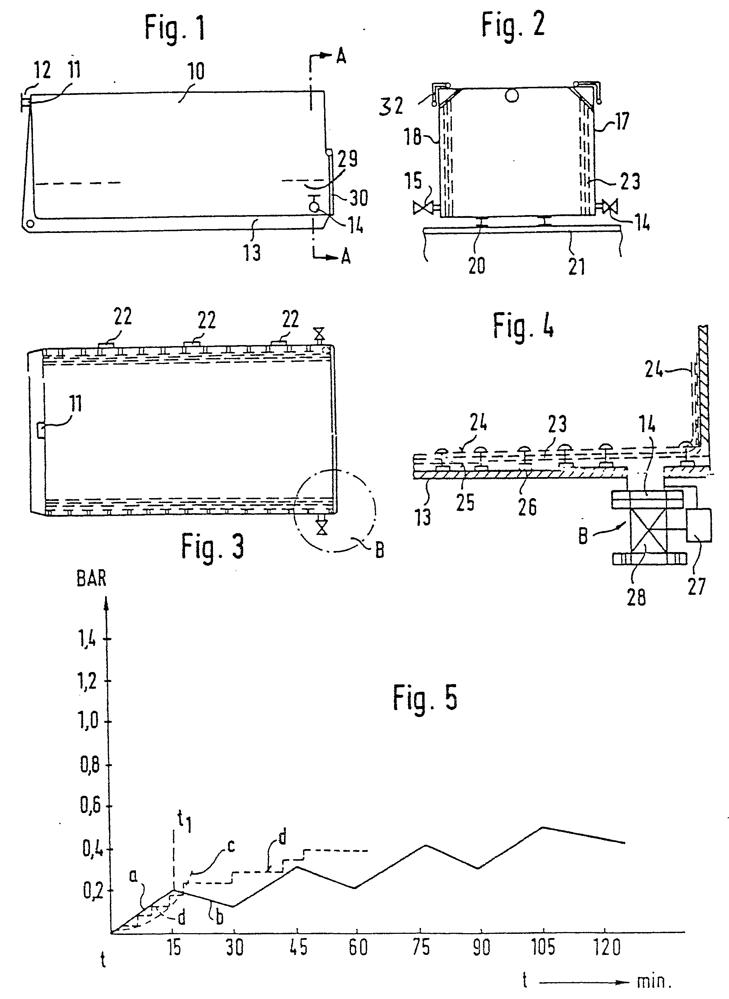

Ein aus Stahlblech bestehender Behälter 10 von rechteckiger Form (vgl. Fig. 1) weist an einer Seite, vorzugsweise einer Stirnseite, eine Armatur, z.B. einen Gewindestutzen 11 auf, der in eine obere Öffnung des Behälters 10 fest eingesetzt, z.B. verschraubt wird. Die Armatur weist einen zum Anschluss für einen nicht dargestellten Schlauch vorhandenen Flansch 12 auf. Zur Behälteröffnung kann die Armatur 11 durch einen oder mehrere Dichtringe aus Polytetrafluoräthylen oder Kautschuk abgedichtet sein. An den Flansch 12 wird ein Anschlusselement, z.B. ebenfalls ein Flansch des den Schlamm in den Behälter 10 mit Hilfe einer Pumpe fördernden Schlauches, angeschlossen. Die (nicht dargestellte) Pumpe ist eine Exzenterschneckenpumpe, Membanpumpe oder eine Druckschlauchpumpe, wobei letztere mit intermittierend an einer Schlauchwandung mit Quetschwirkung angreifende Bauelement, z.B. umlaufende Rollen, versehen ist. Der Behälter 10 hat im Bereich des Bodens 13 eine oder mehrere Armaturen 14,15 zum Ablassen des Filtrats. Die Ablassarmaturen sind in ihrer einfachsten Bauweise als Kegel- oder Schieberventile ausgebildet. Zwischen Behälterwandung und Armaturhals kann mindestens eine nachgiebige O-Ringdichtung aus Kautschuk od. dgl. eingesetzt sein. Der als Druckbehälter ausgebildete Behälter 10 kann einen Deckel aufweisen. Zwischen der oberen Stirnkante der Seitenwände 17, 18 und der Innenfläche des Deckels kann eine umlaufende Profildichtung aus Kautschuk oder, bei aggressiveren Schlämmen, aus Polytetrafluoräthylen dichtend im Randbereich eingesetzt sein. Des Behälter ist vorzugsweise am Boden 13 mit Schienen 20 versehen, die Stahlprofilteile sein können. Diese dienen als Gleitbauteile, um den Behälter 10 auf einen tragenden Boden 21 eines Lastkraftwagens, eines Sattelschleppers oder auch eines Transportkahnes bzw. -schiffes gleitend aufzuschieben. Statt der Schienen 20 können äquivalente, die Reibung verringernde Bauteile, wie Rollen oder Walzen, je nach Einzelfall, benutzt werden. Das als solches bekannte Transportfahrzeug ist nicht dargestellt.

Sofern Behälter 10 mit einer abnehmbaren Wand, insbesondere dem Deckel, gebaut wird, sind im Bereich der Kanten oder Ecken (vgl. Fig. 2) zwischen Deckel und den Stirnwänden und/oder den Seitenwänden 17, 18 mechanische, manuell betätigbare Verschlüsse 32 vorhanden, z.B. Spann-, Haken-, Scharnierverschlüsse. Hier greift z.B. eine an einem Kniehebel vorhandede Öse, befestigt an der Seitwand 17 bzw. 18 in ein am Dekkel starr befestigtes Maul oder einen Haken, ein. Die Dicke und/oder Anordnung der Behälterwände ist nach einer Ausführungsform der Erfindung so ausgelegt, dass sie bei dem zu erwartenden Höchstüberdruck in Behälter, der bei 4,4 bar liegen kann, zuzüglich eines aus der Wöhlerkurve bekannten Sicherheitskoeffizienten für die Dauerbelastung eines Metalles, vollständig ausserhalb einer Rissgefahr liegen. Ferner können verstärkende Segmente, wie Rippen oder Stege, über den Deckel bzw. den Boden 13 als auch über die Seitenwände geführt und festgemacht sein, z.B. Rippen 22 in Fig. 3. Solche Stützelemente können die gesamte Wandhöhe ausnutzen. Vorzugsweise bilden solche Stützelemente an den Längsseiten der Wände im Inneren des Behälters zugleich Abstandshalter, die eine Tragkonstruktion aus einem ausreichend stark dimensionierten Lochblech und/oder einer starren, kräftigen Drahtgitterunterlage darstellen. Dies ist in Fig. 4 dargestellt. Hier ist das eigentliche Filterelement 23 (Gewebewand oder ein Polymergitter) dargestellt. Das Filterelement 23 kann am oberen Ende überstehend ausgebildet und an der Wand anliegend und mit einer Abdichtung gegen evt. aufspritzende Schlämme und/oder sonstige zu entwässernde feststoffhaltige Flüssigkeiten ausgebildet sein. Dieses Element 23 kann auch an einer Versteifungswinkelkonstruktion 24 anliegend angeordnet sein. Erfindungsgemäss ist es vorteilhaft, das Filterelement 23 in gesamter Länge und bis auf die obere Umbiegekante desselben auch in der Höhe mit einer groben Schutznetzkonstruktion zu bedecken. In Fig. 4 ist das Schutznetz 24 schematisch dargestellt. Unter dem Filterelement 23 befindet sich eine Tragkonstruktion für dieses in Form eines Lochbleches oder Grobgitters 25. Zwischen dem Boden 13 und dem Grobgitter 25 angeordnete Halteelemente 26 dienen als Abstandshalter für das Filterelement 23. Diese Halteteile 26 sind gemäss Erfindung gleichzeitig als Stütz- und Versteifungselemente für die Behälterwände vorgesehen.

Die Anordnung des Filterelementes 23, des Schutznetzes 24, des Grobnetzes 25 erstreckt sich (wie nur angedeutet) weiter entlang der Innenfläche der Seitenwände 17, 18 und der anderen Wände. Das Filterelement kann ausser einem Filtergewebe auch ein Feinsieb sein.

Das Ablassen des Filtrats über den Ablaufstutzen 14 oder 15 erfolgt über durch ein Druckmanometer 27 gesteurtes Ablaufventil 28. Das Manometer 27 kann auf einen Überdruck von 0,3 bis 1,2 bar, oder höher, je nach Auslegung des Behälters als Druckbehälter, eingestellt sein. Auch kann das Manometer 27 über eine nicht dargestellte Steuer- oder Regelleitung mit der an der Armatur 11 angeschlossenen, den Schlamm in den Behälter 10 fördernden Pumpe in Verbindung stehen. In dem Druck- Zeit-Diagramm gemäss Fig. 5 ist ein erfindungsgemässer Ausführungsweg für die Beschickung des Behälters 10 mit dem zu filtrierenden Schlamm dargestellt. Diese zeigt die intermittierende Ausführungsvariante. Nach einem allmählichen, hier linearen Druckanstieg im Kurvenzweig a erfolgt zum Zeitpunkt t1 das Öffnen des Ventils 28, das Filtrat wird abgelassen und hieraus ergibt sich ein Druckabfall gemäss Zweig b. Dieser Ablauf wiederholt sich sinngemäss für die weitere Betriebszeit. Der in Fig. 1 angedeutete Schlammkuchen 29, der später durch eine verschliessbare Klappe 30 od. dgl. abführbar ist, gibt somit in jedem Arbeitszyklus ein a-t1-b-Filtrat ab, bzw. der sich entwässernde Kuchen vergrössert sich nacheinander in vertikaler Richtung.

Das erfindungsgemässe Verfahren gestattet, die Effizienz der Entwässerung zu steigern, in Abhängigkeit von der Art des Schlammes, der Bauweise des Behälters, der erwünschten Stichfestigkeit oder einer anderen Betriebseigenschaft des Kuchens und/oder Filtrats. Dies kann durch quadratisch ansteigende (nicht dargestellt) Druckkurvenwerte erreicht werden. In dem Zweig bis zum Punkt t1 erfolgt zunächst der Druckanstieg geringer, danach aber wesentlich steiler, etwa nach der Formel $b=f(t^2)$. Es ist erkannt worden, dass durch nicht linearen Druckanstieg im Behälter, Kurve c, die Einwirkungsmöglichkeiten auf Kuchen und/oder Filtratdurchsatz vergrössert werden können. Dies kann auch durch einen impulsartigen Druckverlauf, Kurve d, bzw. durch stossweise Erhöhung der Schlammzufuhr in den Behälter 16 erfolgen, Kurve b. Im Einzelfall vergrössert sich die vorteilhafte Einwirkung auf Kuchen und Filtrat, indem dieser Druckaufbau in unterschiedlich langen Zeit- bzw. Druckperioden durchgeführt wird.

## Patentansprüche

1. Verfahren zur Ausscheidung von Flüssigkeiten aus heterogenen Flüssigkeitsfeststoffgefügen als Entwässerungs- bzw. Eindickverfahren für kommunale oder industrielle Schlämme, insbesondere Dünnschlämme, bei dem in einen Behälter Schlamm bei einem niedrigen und danach einem relativ höheren Druck zugepumpt wird und aus dem Behälterdruckraum bzw. einem Schlammkuchen innerhalb des Behälters ein Filtrat abgezogen wird, dadurch gekennzeichnet, dass bei Anwendung des Verfahrens auf einen transportablen, mit einem Filtergewebe oder einem Feinsieb versehenen Behälter, unterstützt durch die Einwirkung der Schwerkraft auf den Schlamm, in Teilbereichen eines Druck-Zeit-Diagramm, es für den den Schlamm aufnehmenden, einen hydraulisch unmittelbar und durchgehend zusammenhängenden Druckraum aufweisenden Behälter mit linear und/oder quadratisch ansteigenden Druckwerten gearbeitet und der Druckaufbau und die Druckverteilung im Filtratschlamm intermittierend und/oder impulsartig ausgeführt wird.

2. Verfahren nach Anspruch 1, dadurch gekennzeichnet, dass der Druckaufbau bzw. die Druckverteilung mit unterschiedlich langen Zeit- und/oder Druckperioden durchgeführt wird.

3. Vorrichtung zur Durchführung des Verfahrens nach Anspruch 1, dadurch gekennzeichnet, dass die Wände des Behälters (10) an seiner Innen- und/oder Aussenfläche eine die Wand in bezug auf dem maximalen Innendruck im Schlamm versteifende Stützkonstruktion mit streben-, rippen- oder stegartigen Stützelementen (22, 26) aufweisen.

4. Vorrichtung nach Anspruch 3, dadurch gekennzeichnet, dass das Feinsieb (23) durch ein inneres und/oder ein äusseres, als Schutz- bzw. Tragelement dienendes, netz- oder Lochblechartiges Bauteil (25) bedeckt oder umfasst ist.

5. Vorrichtung nach den Ansprüche 3 und 4, dadurch gekennzeichnet, dass als Tragelement für das Feinsieb zwischen dem Bauteil (25) bzw. dem Feinsieb (23) selbst und der Behälterwand angeordnete, als Abstandshalter dienende Halteelemente vorhanden sind.

6. Vorrichtung nach einem der Ansprüche 3 bis 5, gekennzeichnet durch die Vereinigung folgender Merkmale: a) mindestens ein Druckmanometer (27) für die Messung des Behälterinnendrucks; b) mindestens ein Sicherheitsventil (28) für die Öffnung mindestens eines Abflussstutzens, z.B. des Filtratstutzens, bei Überschreitung eines vorbestimmten Behälterinnenüberdruckes von z.B. 0,3 – 1,2 bar und c) mindestens ein Rückschlagventil, bzw. eine Rückschlagklappe für die Schlammzuführleitung, wobei mindestens zwei dieser Bauteile zu einem vom Behälterinnendruck und/oder der Betriebszeit abhängigen Steuer- oder Regelkreis verbunden sind.

## Claims

1. Method to separate liquids from heterogenious mixtures, containing liquids and solid particles, in order to drain or concentrate community or industrial sludges, especially low viscosity sludges whereat sludge will be pumped to a container at a lower pressure and thereafter at a comparatively higher pressure and a filtrate will be drawn off from the volume of the container, submitted to pressure, or the sludge cake, respectively, within the container, characterized in that in the method a transportable container is applied, which is provided with a filter mesh or a fine mesh sieve whereat the action upon the sludge is supported by the gravity force and the method will be applied in fractional portions of a pressure-time diagram of the container, comprising the sludge and having a hydraulically directly and continously connected pressure volume, in which diagram increasing pressure values will be applied which are linear and/or of square tape and whereat increasing structure of pressure and the pressure distribution in the filtrate sludge will be carried out intermittently and/or in a pulse type.

2. Method according to claim 1, characterized in that the structure of pressure and the pressure distribution, respectively, will be carried out on behalf of time and/or pressure periods, having different lengths.

3. Device to carry out the method according to claim 1, characterized in that the walls of the container (10) are provided at its inner and/or outer surfaces with a supporting structure having strap, rib or web type support elements (22, 26), in order to stiffen the wall in respect to the maximum inner pressure in the sludge.

4. Device according to claim 3, characterized in that the fine sieve (23) is covered with or surrounded by an inner and/or outer mesh type or perforated sheet type element (25), used as protective and carrying element, respectively.

5. Device according to one of claims 3 and 4, characterized in that between the element (25) and the fine sieve (23) itself, respectively, and the wall of the container there is provided a support element for the fine sieve which are holding elements, used as space holders.

6. Device according to one of claims 3 to 5, characterized by the combination of following items: (a) a least one pressure manometer (27) in order to measure the internal pressure of the container; (b) at least one security valve (28), provided for the outlet of at least one draw-off nipple, e.g. the filtrate nipple, when exceeding a predetermined inner surplus pressure of, the container of, e.g. 0.3-1.2 bar, and (c) at least one back-pressure valve or a non-return flap, respectively, for the sludge inlet conduit, whereat at least two of said elements are connected to provide a control or check circuit which is depending from the inner pressure and/or the operating time of the container.

## Revendications

1. Procédé pour la séparation de liquides à partir de matières composites de liquides et de solides en tant que procédé de déshydratation ou d'épaississement de boues communales ou industrielles, notamment de boues liquides, dans lequel de la boue est pompée dans une cuve sous une faible pression et ensuite une pression relativement plus élevée, et dans lequel on extrait un filtrat de la chambre de pression/cuve ou un tourteau de boue à l'intérieur de la cuve, caractérisé par le fait que lors de l'application du procédé, on travaille avec une cuve transportable qui présente un tissu de filtrage ou un tamis fin, tout en utilisant aussi l'effet de la pesanteur sur la boue dans certaines plages partielles d'un diagramme pression temps prévu pour la cuve recevant la boue et présentant une chambre de pression comportant un système hydraulique directement continu en faisant appel à des pressions augmentant de manière linéaire et/ou au carré, et par le fait que l'augmentation de la pression et la répartition de la pression dans la boue de filtration est appliquée de manière intermittente et/ou par pulsions.

2. Procédé selon la revendication 1, caractérisé par le fait que l'augmentation de la pression et la répartition de la pression sont effectuées à intervalles et/ou périodes de pression de différentes durées.

3. Dispositif pour l'exécution du procédé selon la revendication 1, caractérisé par le fait que les parois de la cuve (10) présentent en leur surface intérieure et/ou surface extérieure une structure de renforcement composée d'éléments de renforcement semblables à des tirants, nervures ou entretoises rendant la paroi plus rigide par rapport à la pression intérieure maximale dans la boue.

4. Dispositif selon la revendication 3, caractérisé par le fait que le tamis fin (23) est recouvert ou entouré d'une pièce intérieure et/ou extérieure sous forme de réseau ou de tôle perforée servant de protection ou d'élément porteur (25).

5. Dispositif selon les revendications 3 et 4, caractérisé par le fait que des éléments de fixation servant de pièces d'écartement sont disposés en tant qu'éléments porteurs du tamis fin entre la pièce (25) ainsi qu'entre le tamis fin (23) lui-même et la paroi de la cuve.

6. Dispositif selon l'une des revendications 3 à 5, caractérisé par la combinaison des caractéristiques suivantes: a) au moins un manomètre de pression (27) pour mesurer la pression intérieure de la cuve; b) au moins une soupape de sécurité (28) pour ouvrir au moins une tubulure d'écoulement, par exemple la tubulure de filtrat lorsque la surpression prédéterminée à l'intérieur de la cuve de par exemple 0,3 à 1,2 bar est dépassée, et c) au moins une soupape de retenue ou un clapet de retenue pour la tubulure d'admission de la boue, deux de ces éléments au moins étant raccordés à un circuit de commande ou de régulation asservi à la pression intérieure de la cuve et/ou à la durée de fonctionnement.

## Fig. 1

## Fig. 2

## Fig. 3

## Fig. 4

## Fig. 5

BAR